# EUROPÄISCHE PATENTANMELDUNG

(11) **EP 3 627 406 A1**
(43) Veröffentlichungstag der Anmeldung: **25.03.2020**
(21) Anmeldenummer: 19000400.2
(22) Anmeldetag: 09.09.2019
(51) Int. Cl.: G06Q 10/00

(54) **VERFAHREN UND VORRICHTUNG FÜR EINE HANDELSPLATTFORM FÜR GEBRAUCHTE ELEKTRONIKGERÄTE**

(30) Priorität: 19.09.2018 DE 102018007373
(71) Anmelder: Düsing, Peter, 80538 München (DE)
(72) Erfinder: Düsing, Peter, 80538 München (DE)
(74) Vertreter: Fuchs, Franz-Josef

(57) **Zusammenfassung**

Die Erfindung schafft ein Verfahren zur verlässlichen Bewertung gebrauchter elektronischer Geräte, zur automatisierten Erstellung eines Verkaufsexposes und zur Automatisierung der Vielzahl der zu verrichten Schritte, die in einem Verkaufsablauf stattfinden.

## Beschreibung

Die vorliegende Erfindung betrifft ein Verfahren, dass den Verkauf von gebrauchten Elektronikgeräten maßgeblich erleichtert. Der Verkäufer nutzt eine Anwendung auf dem gebrauchten Gerät, die die verschiedenen Komponenten des Geräts einer fälschungssicheren Prüfung unterzieht. Hieraus erstellt die Anwendung ein zertifiziertes Expose, welches die Anwendung automatisch auf einer elektronischen Handelsplattform publiziert, wo der potentielle Käufer durch die Evaluierung einen sehr genauen Wissensstand über den Zustand des Geräts erhält und somit gewillt ist, einen deutlich höheren Kaufpreis zu bezahlen, als ohne diesen Wissensstand. Darüber hinaus unterstützt das Verfahren Verkäufer und Käufer durch Automatisierung der im Verkaufsprozess anfallenden Schritte.

Handelsplattformen sind seit langem bekannt. Schon US3581072A beschreibt eine Handelsplattform für Handelsgüter. US4412287A beschreibt eine Handelsplattform für Aktien und US4903201A für Finanzderivate. Diesen Plattformen gemein ist, dass der Wert der hierüber gehandelten Waren nicht von ihrem Gebrauchszustand abhängen. Im einfachsten Fall handelt es sich um definierte Handelsgüter, die sich nicht in Eigenschaften und Qualität unterscheiden. Handelt es sich um komplexere Produkte, so wird dem Käufer anhand eines elektronischen Produktkatalogs, d.h. einer Beschreibung der Ware im Auslieferungszustand, sowie nach dem Stand der Technik mit Kundenbewertungen geholfen, die die Erfahrungen anderer Käufer mit dem selben Produkt beschreiben, so etwa bei Amazon.com. Dieses Verfahren ist für gebrauchte Artikel ungenügend, weil ein entscheidender preisbestimmender Faktor der derzeitige Zustand des Geräts ist. In der weltweit größten Handelsplattform für Gebrauchtartikel - Ebay - beschreibt der Verkäufer im Detail den Zustand seiner Ware. Dieser Prozess ist aufwendig und fehleranfällig, vor allem aber fehlt eine objektive Bewertung des Zustands der Ware.

Der hier beschriebene neuartige Prozess ist immer nur dann möglich, wenn es sich bei der Ware um ein elektronisches Gerät handelt, das mittels einer darauf befindlichen Software objektiv geprüft werden kann, oder von einem zweiten Gerät anhand einer Software über Progammierschnittstellen manipulationssicher geprüft werden kann. In diesem Fall kann diese Softwareanwendung einerseits eine objektive Bewertung des Ist-Zustands vornehmen. Anderseits wird die Aufgabe, das Gerät anhand seines aktuellen Zustands zu beschreiben, dem technischen Laien ermöglicht, automatisiert und die Beschreibung standardisiert und daher für Suche und Vergleiche nutzbar gemacht. Dadurch wird eine dezidierte Handelsplattform für diese Produktgruppe ermöglicht, wie es sie bereits beispielshalber für Immobilien und für Autos gibt, wo aber die Erstellung eines Verkaufsexposes ein manueller und arbeitsintensiver Prozess ist, der sich dort in Anbetracht des Werts der einzelnen Ware lohnt, was typischerweise bei elektronischen Geräten nur eingeschränkt der Fall ist.

Der Wiederverwertungsmarkt für gebrauchte Elektronikgeräte, insbesondere sogenannte Smartphones, wächst. Dies ist aus vielerlei Gründen erstrebenswert, beispielsweise da in entsprechendem Maße Elektronikschrott reduziert werden kann. Allerdings durchläuft die typische Wertschöpfungskette bei der Wiederverwertung von Elektronikgeräten im Normalfall Zwischenhändler, wodurch zusätzliche Logistik und manuelle Verarbeitung nötig wird. Andernfalls besteht beim Direktverkauf große Ungewißheit, in welchem Zustand sich ein Gerät befindet, was zu massiven Preisabschlägen führt. Zudem hat der einzelne Privatverkäufer nur gelegentlich Ware für den Verkauf und ist häufig technischer Laie, so dass ein einfacher Verkaufsprozess nötig ist. Üblicherweise wird ein gebrauchtes Mobiltelefon heute in ungewissem technischen Zustand verkauft, was den Verkaufspreis massiv drückt. Zudem werden sehr viele gebrauchte und nicht mehr genutzte Mobiltelefone gar nicht mehr wiederverwertet, was dem Aufwand im Vergleich zum im Anblick der Unsicherheit niedrigen Verkaufspreis geschuldet ist, sowie verschiedenen technischen Hindernissen, die sich durch eine Anwendung auf dem Gerät automatisieren lassen, wie etwa die Bereinigung privater Daten und die Aufhebung diverser Sperrungen, die das Gerät für den Käufer unnutzbar machen würden.

Nach dem derzeitigen Stand der Technik gibt es Prüfsoftware für Mobiltelefone, die es dem Anwender ermöglicht, Information über den Zustand des Mobiltelefons zu erlangen. Die seit 2011 von der Deutschen Telekom vermarktete Smartphone Hilfe ist eine derartige Software. Hinreichend geläufig sind dem Fachmann auch Prüfungsroutinen für Funktionen von Smartphones, die durch den Nutzer nicht verfälscht werden können. Beispielshalber kann ein Lautsprecher derart getestet werden, dass eine Stimme über den Lautsprecher eine zufallsgenerierte Zahl nennt, die der Nutzer dann in der Bedienoberfläche eingeben muss.
Bekannt aus ist aus US2010008192 auch ein Verfahren, das Mobiltelefone in Abhängigkeit von Prüfroutinen bewertet und dadurch den Ankauf in einem speziellen Kiosk erlaubt.

Nach dem derzeitigen Stand der Technik gibt es keine Handelsplattform, die es dem Nutzer ermöglicht, ein Verkaufsexpose basierend auf Zustand und Leistungsfähigkeit eines elektronischen Geräts manipulationssicher automatisiert zu erstellen und auf einer Handelsplattform zu veröffentlichen. Ebensowenig gibt es eine Handelsplattform, die es Käufern ermöglicht, gebrauchte elektronische Geräte nach den für den Käufer relevanten Parametern auf Basis von unabhängig verifizierten Daten zu suchen.

Die Aufgabe der hier vorliegenden Erfindung besteht darin, ein Verfahren zu schaffen, worin ein Verkäufer eines gebrauchten Elektronikgeräts das Gerät manipulationssicher prüfen lässt und das Ergebnis dieser Prüfung automatisiert als Verkaufsexpose in einer Handelsplattform potentiellen Käufern dargeboten wird und es Käufern ermöglicht, hier passende Geräte zu finden.
Die Erfindung eignet sich für alle Elektronikgeräte, die es dem Nutzer ermöglichen, frei Software zu installieren und wo eine derartige Software eine umfangreiche Funktionsprüfung durchführen kann. Insbesondere eignet sich die Erfindung für so genannte Smartphones.
Die Erfindung löst diese Aufgabe durch ein Verfahren der eingangs genannten Art mit den kennzeichnenden Merkmalen des Patentanspruchs 1.

Bevorzugte Ausführungsbeispiele der vorliegenden Erfindung werden nachfolgend bezugnehmend auf die beiliegenden Figuren näher erläutert. Es zeigen:
Fig. 1 eine schematische Darstellung der verschiedenen Komponenten, die in der Basisausführung der vorliegenden Erfindung zusammen spielen;
Fig. 2 eine beispielhaftes Flussdiagram des Minimalverfahrens
Fig..3 eine beispielhaftes Flussdiagram einer bevorzugten Variante des Verfahrens

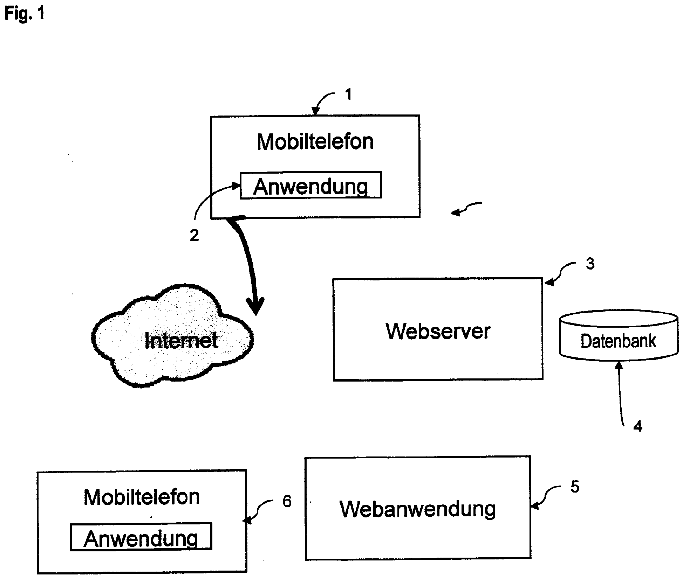

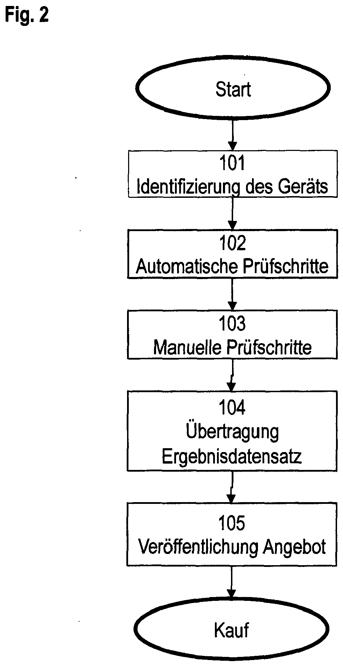

Das Verfahren führt, wie in Figur 1 ersichtlich, eine Anwendung 2 auf einem elektronischen Gerät 1 eines Verkäufers mit einem Webserver 3 zusammen, der Daten über zum Kauf angebotene Geräte in einer Datenbank 4 speichert und potentiellen Käufern auf einer Webanwendung 5 oder einer Anwendung 7 auf einem elektronischen Gerät 6 zur Verfügung stellt.
Wie in Figur 2 dargestellt, werden in einer Minimalversion folgende Schritte auf der Anwendung 2 durchgeführt: Das Gerät wird identifiziert 101, eine Prüfsequenz wird eingeleitet, die aus automatisierten Tests (d.h. ohne Mitwirkung des Nutzers) 102 besteht, sowie aus manuellen Prüfschritten 103, welche die Mitwirkung des Nutzers erfordern. Bevorzugte Ausführungsvarianten werden hierbei insbesondere Verschleißteile des Geräts quantitativ bewerten. Wichtig ist hier insbesondere die Batterie, so dass eine bevorzugte Ausführungsvariante bespielsweise einen Volllastentladungstest der Batterie durchführt, der quantifiziert, wie schnell die Batterie unter vorgegebenen Bedingungen entladen wird.

Aus diesen Prüfschritten stellt die Anwendung 2 ein Prüfprotokoll zusammen, das sie als Ergebnisdatensatz an den Webserver 3 überträgt 104, der wiederum die Daten in der Datenbank 4 speichert. Durch entsprechende Anweisung des Verkäufer wird dieser Datensatz dann Käufern über eine Webanwendung 5 oder eine Anwendung 7 auf einem elektronischen Gerät 6 als Verkaufsexpose zur Verfügung gestellt.

Da der Verkäufer bei diesem Prozess keine Möglichkeit hat, die Messdaten zu verfälschen und auch in den manuellen Tests lediglich beeinflussen kann, ob ein Test durchgeführt wird oder eben nicht, gleicht dieses Prüfergebnis einem Zertifikat, das manipulationssicher den Zustand des Geräts zum besagten Zeitpunkt beschreibt und hiermit dem Käufer eine zuverlässige Beurteilung des Geräts vor dem Kauf zur Verfügung stellt.

Wie für den Fachmann offenkundig, ist es grundsätzlich möglich, das gesamte Verfahren auch mit einer minimalisierten Serverlösung zu betreiben, wo der gesamte Datenfluss von der einen Anwendung zur anderen Anwendung und zurück läuft und der Server lediglich zur Benutzerverwaltung dient. Es ist daher möglich verschiedene im Folgenden aufgeführte Abläufe und Daten auf unterschiedlichen Komponenten auszuführen, ohne dass das Grundprinzip der Erfindung hierdurch beeinträchtigt wird.

Die automatisierten Tests belaufen sich hierbei grundsätzlich auf alle technischen Komponenten des Geräts, die im Normalzustand durch direkte Programmieraufrufe geprüft werden können. Hierzu gehört die Prüfung der Betriebssystemkomponenten, der installierten Software, der verfügbaren Hardwarekomponenten und deren Ansteuerbarkeit, sowie auch Funktionstests dieser Hardwarekomponenten, insofern der momentane Zustand des Geräts diese erlaubt. So kann bei einem Mobiltelefon mit eingelegter aktivierter SIM-Karte und derzeitiger Netzverbindung z.B. eine Probeanruf plaziert werden, der z.B. einen Verbindungsaufbau und die Gesprächsqualität basierend auf dem GSM-Standard vollautomatisiert bewertet. Ist aber derzeit keine SIM-Karte eingelegt oder diese gesperrt, so muss der Verkäufer erst diese Daten zur Verfügung stellen, um in einem manuellen Test die selbe Funktionsprüfung durchzuführen. Letztendlich ist der Test jedoch in beiden Fällen der gleiche und das Ergebnis kann nicht durch den Verkäufer beeinflusst werden. Zu den manuellen Tests gehört beispielsweise auch die Überprüfung der so genannten Touch-Screen Funktionalität eines Mobiltelefons, wobei der Anwender angewiesen wird, den gesamten Display mit dem Finger abzustreichen, wobei geprüft wird, dass an jeder Bildschirmkoordinate der Berührungssensor aktiviert wird. Auch hier kann der Verkäufer ein positives Testergebnis nicht verfälschen, sondern schlimmstenfalls durch eventuelle Ungeschicktheit ein falsches negatives Testergebnis verursachen, weshalb ein bevorzugtes Anwendungsbeispiel auch die Wiederholung von Tests ermöglicht. Allgemeiner fallen in diese Kategorie alle Tests, wo die Funktionstüchtigkeit der im Gerät eingebauten Sensoren nur durch Mithilfe des Nutzers getestet werden kann, wie also auch beispielsweise Bewegungssensoren, Fingerabdrucksprüfung und der sogenannte Proximity-Sensor. Eine andere Klasse von Tests sind solche, wo das Gerät eine Aktion durchführt, aber das Ergebnis nicht eigenständig messen kann.Hier kann die Interaktion des Nutzers derart gestaltet werden, dass die Aktion ein Muster enthält, das der Nutzer entschlüsseln muss. Beispielsweise beinhaltet eine einfache Prüfung einer Leuchte, dass diese in der Prüfung wiederholt an- und ausgeschaltet wird und der Nutzer eingeben muss, wieviele Leuchtintervalle zu sehen waren.

Eine weiter Klasse von Testverfahren beinhaltet eine Interaktion mit einem Server, so das Testergebnis ausgewertet wird. Beispielsweise kann ein Mobiltelefon automatisiert eine Rufnummer anrufen, dort eine Sprachnachricht übermitteln und der Server wertet das angekommene akustische Signal aus. Derartige Tests können beispielsweise auch für eingebaute Kameras nützlich sein, wo eine Abfolge von Bildern mit veränderter Scharfstellung zu Bildmaterial führt, dessen Auswertung die Möglichkeiten innerhalb der Anwendung selbst anhand der gegebenen Prozessorleistung übersteigt oder weil Vergleiche mit ähnlichem, auf dem Server verfügbaren, Datenmaterial nötig sind.
Die genaue Auswahl der implementierten Tests wird sinnvollerweise so stattfinden, dass diejenigen Parameter bevorzugt geprüft werden, die sich maßgeblich auf den Verkaufspreis auswirken. In einer bevorzugten Ausführungsvariante kann der Verkäufer selber entscheiden, ob einzelne Tests in der Ausführung zu aufwendig sind, wird aber in einer weiteren bevorzugten Ausführungsvariante von der Anwendung darauf hingewiesen, wie sich das fehlende Testergebnis auf den wahrscheinlich zu erzielenden Verkaufspreis auswirkt.

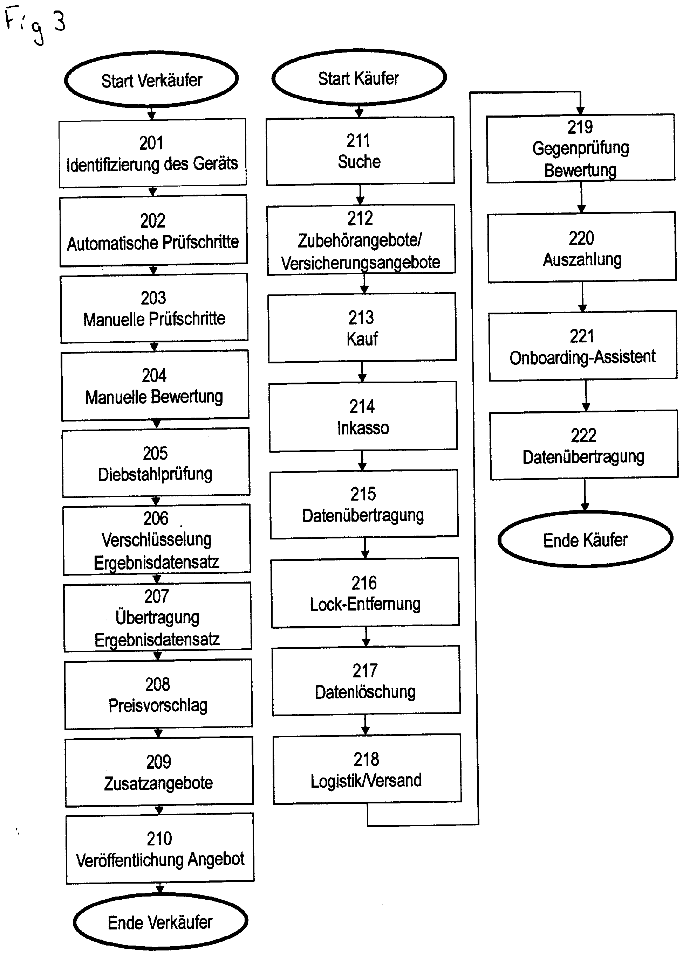

In Figur 3 ist eine bevorzugtes Ausführungsvariante des Verkaufsprozesses beschrieben, der zusätzliche Verfahrensschritte beinhaltet, welche die gesamte Transaktion für Verkäufer und Käufer einfacher gestalten und zusätzlich die Manipulationssicherheit erhöhen. Zusätzlich zu den in Figur 2 beschriebenen Schritten, finden hier folgende Abläufe statt:
1. Das Prüfprotokoll wird mit Bewertungen des Verkäufers angereichert 204. Dies sind keine unverfälschbaren Prüfaktionen, sondern Aussagen des Verkäufers, wo er verbindliche Zusagen zum Zustand des verkauften Geräts vornimmt. Beispielshaft enthalten elektronische Geräte häufig Feuchtigkeitssensoren, die über einen möglichen Wasserschaden am Gerät Auskunft geben, aber programmatisch nicht zugänglich sind. Hier kann die Anwendung 2 dem Verkäufer anhand des identifizierten Gerätemodells Anleitung geben, wie dieser Sensor manuell ausgelesen werden kann und der Verkäufer kann das Ergebnis eingeben und zusichern. Hierbei schützt das Verfahren nicht vor Unehrlichkeit des Verkäufers, aber zumindest wird eine Aussage des Verkäufers zum Zustand des Geräts protokolliert.
2. Eine sinnvolle Erweiterung ist eine Diebstahlprüfung 205. Hier wird der Käufer davor geschützt, dass die gekaufte Wahre dem Verkäufer nichts rechtmäßig gehört. Eine derartige Prüfung kann anhand eines entsprechenden Geräteidentifikationszeichens erfolgen, wie z.B. der Seriennummer, die von der Anwendung 2 programmatisch ausgelesen wird und automatisch gegen eine bestehende Datenbank gestohlener Geräte geprüft wird.
3. Ähnlich zur Diebstahlprüfung kann anhand des Geräteidentifikationszeichens auch eine eventuell noch bestehende Hersteller- oder Verkäufergarantie oder Gewährleistung abgefragt und geprüft werden und als zusätzliches Merkmal automatisiert in das Verkaufsexpose aufgenommen werden.
4. Die Prüfungsdaten werden nach Erhebung nach einem passenden, dem Stand der Technik entsprechenden Verfahren kryptographisch gesichert und vor späteren Verfälschungen geschützt 206, beispielsweise nach der bekannten Technologie des Blockchain-Verfahrens. Hiermit wird sicher gestellt, dass die Datenintegrität nachhaltig gewährleistet ist.
5. Nach der Prüfung wird dem Verkäufer auf Basis der Prüfergebnisse ein Preisvorschlag übermittelt 208, das dem aktuellen Marktwert des Geräts in dem Zustand entspricht. Dieser Wert wird in einer bevorzugten Ausführungsvariante anhand der erfolgten Verkäufe über das System ermittelt.
6. Dem Verkäufer wird die Möglichkeit gegeben, Zusatzoptionen zum Gerät anzubieten 209. Zusatzoptionen beinhalten beispielsweise: zusätzliche Hardware, wie ein passendes Ladegerät; oder Software, wie eine bestimmte Anwendung, die nicht vom Verkäufer selbst, sondern vom Plattformbetreiber passend zum elektronischen Gerät dazu verkauft werden, um das Gesamtpaket für Käufer attraktiver zu gestalten. Bei einer Zusatzoption kann es sich auch um eine Versicherung handeln, die den Käufer in Form einer Produktgarantie schützt, oder um andere Dienstleistungen, wie etwas Hilfe bei der Einrichtung des neuen Geräts.
7. Die Anwendung 2 kann dem Verkäufer in bevorzugten Anwendungsvarianten bei folgenden Schritten helfen:
   7.1. Datenübertragung 215 von auf dem Gerät befindlichen Nutzerdaten auf ein neues Speichermedium, z.B. auf das neue Mobiltelefon des Verkäufers
   7.2. Datenlöschung 217 der verbleibenden Nutzerdaten auf dem elektronischen Gerät
8. In einer bevorzugten Anwendungsvariante kann die Anwendung dem Nutzer dabei helfen, das Gerät in einen für den Verkauf geeigneten Zustand zu versetzen. Hierzu gehört:
   8.1. Aktualisierung der auf dem Gerät befindlichen Software
   8.2. Entfernung diverser Lock-Mechanismen 216, welche die Nutzung des Geräts durch den Käufer einschränken könnten, wie Device-Lock, SIM-Lock oder die so genannten "find-my-phone" Aktivierung.
9. In einer bevorzugten Anwendungsvariante ist das System dahingehend mit einem Logistikanbieter integriert, dass Käufer und Verkäufer nur noch ihre bevorzugten Abgabe/Annahmeorte eingeben müssen, um den Versand vom Verkäufer zum Käufer zu organisieren 218.
10. In einer bevorzugten Anwendungsvariante ist ein Zahlungssystem integriert 214/220, das in einer wiederum bevorzugten Untervariante den Kaufpreis zuerst vom Käufer einzieht und dann treuhänderisch verwaltet, bis das Gerät unbeschadet beim Käufer eingetroffen ist und dann erst an den Verkäufer auszahlt.
11. In einer bevorzugten Anwendungsvariante werden dem Käufer von der Plattform Zusatzangebote passend zum gebrauchten Gerät angeboten 212. Diese können vom Käufer zusätzlich erworben werden und beinhalten beispielsweise Versicherung, zusätzliche Hardware oder Dienstleistungen.
12. In einer bevorzugten Anwendungsvariante verbleibt die Anwendung 2 auch nach dem Kauf auf dem elektronischen Gerät und kann hier dem Käufer folgende Abläufe erleichtern:
   12.1 Gegenprüfung des aktuellen Zustands des elektronischen Geräts nach Empfang 219, in einer bevorzugten Untervariante mit Gegenüberstellung zum Prüfergebnis des Verkäufers
   12.2 Datenübertragung auf das elektronische Gerät 222, beispielsweise vom bestehenden Mobiltelefon auf das neu erworbene
   12.3 Einführungshilfen in die Nutzung des neuen Geräts 221 12.4 Berechnung des Wiederverkaufswert zum Zeitpunkt des Kaufs und zu jedem späteren Zeitpunkt anhand einer neuen Prüfung 201-208
   12.5 Suche nach passenden Ersatzgeräten auf der Handelsplattform 211, in einer bevorzugten Untervariante entsprechend dem Anwendungsprofil des Nutzers. Beispielsweise kann die Anwendung bei häufiger Nutzung von Video-Streaming Applikationen zu einem Smartphone mit entsprechender Bildschirmgröße raten.
   12.6 Fernwartungsmöglichkeiten zur Hilfestellung bei der Nutzung des elektronischen Geräts: Hiermit kann dem Käufer als zusätzliche Dienstleistung Hilfestellung von Experten angeboten werden, die auf das Gerät per Fernwartung zugreifen.

Wie hieraus ersichtlich, kann die Anwendung 2 also auch Käufern zur gezielten Suche nach passenden Geräten helfen, als Alternative zur Webanwendung 5. Dementsprechend wird hier ein System geschaffen, wo Verkauf und Kauf des gleichen Geräts durch unterschiedliche Parteien von der gleichen Anwendung unterstützt werden kann.

In jedem Fall ermöglicht die nach dem patentmäßigen Verfahren entsprechend der einzelnen Prüfergebnisse strukturierte Datenhaltung in einer bevorzugten Ausführungsvariante auch die gezielte Suche eines Käufers nach Geräten mit bestimmten Ausstattungsmerkmalen, wie z.B. "mit funktionierendem GPS Sensor".

In einer bevorzugten Anwendungsvariante kann diese Suche auch anhand von Vergleichswerten erfolgen, z.B. die Suche nach einem Gebrauchtmobiltelefon mit ähnlichen Ausstattungsmerkmalen wie ein dem Käufer geläufiges neues Mobiltelefon.

In einer anderen bevorzugten Anwendungsvariante, kann diese Suche auch anhand von vom Käufer eingegeben Anwendungsbeispielen erfolgen, z.B. "häufige Verwendung zum Anschauen von Videos".

## Patentansprüche

1. Verfahren zur Bewertung und dem Direktverkauf von mit einer Anwendung versehenen elektronischen Geräten **dadurch gekennzeichnet, dass**:
a) die Anwendung auf dem elektronischen Gerät eine manipulationssichere Funktionsprüfung des Geräts vornimmt;
b) anhand des Ergebnis der Funktionsprüfung ein Verkaufsexpose des elektronischen Geräts erstellt wird;
c) das elektronische Gerät anhand des Verkaufsexposes in einer elektronischen Handelsplattform zum Kauf angeboten wird.

2. Verfahren nach Patentanspruch 1, **dadurch gekennzeichnet, dass** das Ergebnis der Funktionsprüfung und gegebenenfalls der manuellen Bewertung manipulationssicher kryptographisch verschlüsselt gespeichert werden, z.B. nach dem Blockchain Verfahren.

3. Verfahren nach den Patentansprüche 1 oder 2, **dadurch gekennzeichnet, dass** dem Verkäufer auf Basis der Ergebnisse der Funktionsprüfung und der anderen auf der Handelsplattform verkauften Geräte ein Preisvorschlag für sein Gerät bereitgestellt wird.

4. Verfahren nach einem oder mehreren der Patentansprüche 1 - 3, **dadurch gekennzeichnet, dass** eine Prüfung vorgenommen wird, ob das Gerät als gestohlen gemeldet wurde und das Ergebnis dieser Prüfung in das Expose mit aufgenommen wird.

5. Verfahren nach einem oder mehreren der Patentansprüche 1 - 4, **dadurch gekennzeichnet, dass** eine Prüfung vorgenommen wird, ob für das Gerät noch eine Garantie oder Gewährleistung besteht und das Ergebnis dieser Prüfung in das Expose mit aufgenommen wird.

6. Verfahren nach einem oder mehreren der Patentansprüche 1 - 5, **dadurch gekennzeichnet, dass** die Anwendung dem Verkäufer ermöglicht, Daten von dem zu verkaufenden Gerät auf ein anderes Gerät zu übertragen.

7. Verfahren nach einem oder mehreren der Patentansprüche 1 - 6, **dadurch gekennzeichnet, dass** die Anwendung dem Verkäufer ermöglicht, seine Daten von Gerät zu löschen.

8. Verfahren nach einem oder mehreren der Patentansprüche 1 - 7, **dadurch gekennzeichnet, dass** es einen Bezahlmechanismus beinhaltet.

9. Verfahren nach einem oder mehreren der Patentansprüche 1 - 8, **dadurch gekennzeichnet, dass** dem Käufer eine Suche nach passenden elektronischen Geräten entsprechend der durch die Prüfung ermittelten Parameter ermöglicht.

10. Vorrichtung zur Bewertung und zum Verkauf elektronischer Geräte, **gekennzeichnet durch**:
a) eine Anwendung, die auf dem zu verkaufenden elektronischen Gerät eine manipulationssichere Funktionsprüfung des Geräts vornimmt;
b) die Anwendung anhand des Ergebnis der Funktionsprüfung ein Verkaufsexpose des elektronischen Geräts erstellt;
c) das elektronische Gerät anhand des Verkaufsexposes in einer elektronischen Handelsplattform zum Kauf angeboten wird.
